**Europäisches Patentamt**

**European Patent Office**

**Office européen des brevets**

(19)

(11) Veröffentlichungsnummer: **0 094 916**

**B1**

(12)

# EUROPÄISCHE PATENTSCHRIFT

(45) Veröffentlichungstag der Patentschrift:
**04.11.87**

(21) Anmeldenummer: **83810208.5**

(22) Anmeldetag: **16.05.83**

(51) Int. Cl.⁴: **B 60 B 11/02**

(54) **Doppelrad eines Fahrzeuges.**

(30) Priorität: **18.05.82 CH 3100/82**

(43) Veröffentlichungstag der Anmeldung:
**23.11.83 Patentblatt 83/47**

(45) Bekanntmachung des Hinweises auf die Patenterteilung:
**04.11.87 Patentblatt 87/45**

(84) Benannte Vertragsstaaten:
**AT BE DE FR GB IT NL SE**

(56) Entgegenhaltungen:
**FR-A-448 052**
**FR-A-2 337 632**
**GB-A-2 031 351**
**US-A-3 223 455**
**US-A-3 328 088**
**US-A-3 337 270**
**US-A-3 836 202**
**US-A-4 030 753**

(73) Patentinhaber: **Gebr. Schaad, Landmaschinen,
Blumensteinstrasse 10, CH- 4552 Derendingen (CH)**

(72) Erfinder: **Schaad, Fritz Johann,
Blumensteinstrasse 10, CH- 4552 Derendingen (CH)**
Erfinder: **Schaad, Rudolf, Grabmattstrasse 473, CH-
4707 Deitingen (CH)**

(74) Vertreter: **White, William, PATENTANWALTS-
BUREAU ISLER AG Postfach 6940 Walchestrasse
23, CH- 8023 Zürich (CH)**

EP 0 094 916 B1

LIBER, STOCKHOLM 1987

## Beschreibung

Die Erfindung betrifft ein Doppelrad gemäss dem Oberbegriff des unabhängigen Anspruchs 1.

Die Ausrüstung von Fahrzeugen mit Doppelrädern ist bekannt und hat sich in der Praxis zur Verminderung des Bodendruckes, zur Verbesserung der Zugkraft und zur Steigerung der Hangtauglichkeit bewährt. Die bekannten Kupplungsvorrichtungen zum Verbinden der beiden Radfelgen der beiden Einzelräder bestehen in der Regel aus einer flanschartigen Verschraubung mit radial spannenden Hebeln, welche durch Verschlüsse die doppelradseitig am Felgenhorn oder an speziellen in das Felgentiefbett des Doppelrades eingeschweissten T-Ringes angehängt werden. Die T-Ringe sind dabei am Steg in die Felge geschweisst. Die Verschlüsse werden am oberen flachen Teil des T-Ringes eingehängt.

Diese Kupplungsvorrichtungen haben die Nachteile, dass bei grossen Fahrzeugen der Steg des T-Ringes durch die grosse Belastung verbogen wird, und dass zur Befestigung des Aussenrades am Fahrzeugrad das Aussenrad nur bei bestimmten Kupplungsstellungen gekuppelt werden kann.

Durch die US-A-3 337 270 ist ein Doppelrad bekannt geworden, das mehrere Spannschrauben aufweist, die einenends an der Fahrzeugradfelge und anderenends an der äusseren Felge befestigt sind. Die äussere Felge weist hierzu einen Befestigungsring auf, der auf der Innenfläche einer Rille angeschweisst ist und an dem die Spannschrauben eingehängt sind. Zum Montieren müssen die Spannschrauben mit Hilfe von Muttern einzeln angezogen werden.

Auch bei dem durch die GB-A-2 031 351 bekannt gewordenen Doppelrad sind die Spannvorrichtungen an den beiden Felgen befestigt. Die Spannvorrichtungen sind hier jedoch Kniehebelverschlüsse, die an einem an der äusseren Felge angeschweissten Rohr eingehängt sind. Zum Montieren müssen die Spannvorrichtungen in einer Lücke im Rohr zeitaufwendig aufgeschoben werden.

Im Stand der Technik ist ferner durch die US-A-4,030,753 ein Doppelrad bekannt geworden, das anstelle des vollen Distanzrings mehrere Platten aufweist, die an der äusseren Felge angeschweisst sind. Auf diese Platten ist ein Ring angeschweisst, der die Platten stabilisiert und Bohrungen aufweist, durch die Spannschrauben gesteckt sind. Zum Montieren müssen die Spannschrauben mit Hilfe von Muttern gespannt werden. Auch hier kann das Aussenrad nur in bestimmten Kupplungsstellungen gekuppelt werden.

Es ist Aufgabe der Erfindung, ein Doppelrad der eingangs genannten Gattung zu entwickeln, das diese Nachteile nicht aufweist und das dennoch kostengünstig hergestellt werden kann. Diese Aufgabe wird durch die im kennzeichnenden Teil des Anspruchs 1 aufgeführten Merkmale gelöst. Weitere vorteilhafte Ausführungen ergeben sich aus den abhängigen Ansprüchen.

Das erfindungsgemässe Doppelrad hat den Vorteil, dass die Spannvorrichtungen sehr kurz ausgelegt werden können, was bewirkt, dass sich der Distanzring mit dem Aussenrad nur sehr wenig gegen das Fahrzeugrad verdreht, da die bei diesem Vorgang einen entsprechend kleineren Radius beschreibenden Spannvorrichtungen schneller von dem die Tangente bildenden Befestigungsring abweichen. Dieser Umstand trägt ebenfalls zu einer höheren Stabilität bei. Das Aussenrad kann auch beim erfindungsgemässen Doppelrad in jeder beliebigen Stellung an das Fahrzeugrad angekuppelt werden, so dass auch schwere Räder mühelos montiert werden können.

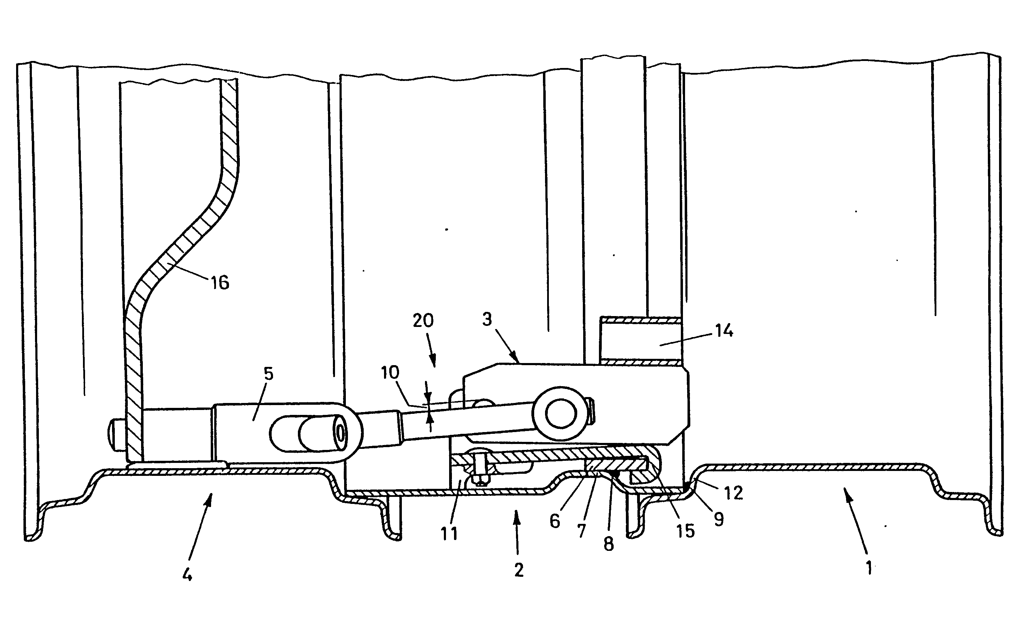

Ein Ausführungsbeispiel der Erfindung wird nachfolgend anhand der Zeichnung näher erläutert. Die einzige Figur zeigt einen Schnitt in radialer Richtung durch ein Doppelrad mit Kupplung.

Das Doppelrad besteht aus einer äusseren Felge 1, in deren eine Schulter 12 ein Distanzring 2 mit der Schweißstelle 9 angeschweisst ist. Mehrere am Umfang verteilte axial wirkende, lösbare Spannvorrichtungen 3 spannen die äussere Felge 1 an die Fahrzeugradfelge 4. Die Spannvorrichtungen 3 werden fahrzeugseitig an Ringmuttern 5 bzw. Anschweissbügeln, die mit der Radscheibe verbunden sind, eingehängt. Auf der Seite der äusseren Felge 1 werden die Spannvorrichtungen 3 an einem Befestigungsring 6 eingehängt. Der Befestigungsring 6 ist an einer Verstärkungsrille 7 des Distanzringes 2 mit einer Schweissnaht 8 so angeschweisst, dass eine Seite des Befestigungsringes 6 vorsteht und gegen den Distanzring 2 einen Freiraum bildet, so dass die Spannvorrichtungen 3 mit den Spannhaken 15 am Befestigungsring 6 eingehängt werden können. Dadurch, dass der Befestigungsring 6 endlos eingeschweisst ist, können die Spannvorrichtungen 3 an jeder Stelle eingehängt werden. Das Aussenrad kann dadurch in jeder beliebigen Stellung an das Fahrzeugrad angekuppelt werden, da die Spannvorrichtungen 3 am Befestigungsring 6 dort eingehängt werden können, wo radial auf gleicher Höhe die Ringmuttern 5 stehen. Auch sehr schwere Doppelräder können so mühelos angekuppelt werden, da keine Mitnehmernocken mehr erforderlich sind. Da fahrzeugseitig keinerlei Nocken zur Übertragung der radialen Kräfte vorgesehen sind, verdreht sich beim Fahren unter Last der Distanzring 2 gegen das Fahrzeugrad. Dabei ziehen die Spannvorrichtungen 3 das Aussenrad über den Distanzring 2 noch fester an das Fahrzeugrad. Durch obige Konstruktion zum Einhängen der Spannvorrichtungen am Doppelrad wird eine grosse Steifheit erreicht. Da infolge der besonderen Steifheit keine Antriebsnocken erforderlich sind, können auch schwere Doppelräder mühelos und ohne dass sie in eine Kupplungsstellung gedreht werden müssen,

3 0 094 916 4

angekuppelt werden.

Die Verstärkungsrille 7, die beispielsweise durch Walzen hergestellt wird, dient als Ansatzstelle für den Befestigungsring 6 und als Verstärkungselement für den Distanzring 2. Bei stark belasteten Doppelrädern können such mehrere Verstärkungsrillen 7 am Distanzring 2 angebracht werden die nach aussen oder nach innen gebuchtet sein können.

Die Anzahl der Spannvorrichtungen 3 kann der zu erwartenden Belastung des Doppelrades angepasst werden.

Der Distanzring 2 ist mit der äusseren Felge 1 verschweisst oder verschraubt. Beim Anfahren des Fahrzeuges verdreht sich das Aussenrad leicht gegen das Innenrad, was eine weitere Annäherung und Versteifung der beiden Einzelräder bewirkt.

Die Spannvorrichtungen 3 werden mit Hilfe des Vierkantrohres 14 gespannt, wobei der Überschnappweg 10 mit einer verstellbaren Unterlage 11 einstellbar ist.

## Patentansprüche

1. Doppelrad eines Fahrzeugs, mit einer Fahrzeugradfelge (4) und einer äusseren Felge (1), einer Kupplungsvorrichtung (20) zwischen den Felgen (1, 4), einem vollen Distanzring (2), der an der äusseren Felge (1) befestigt ist, einem Befestigungsring (6), der auf der Innenfläche einer eingebuchteten Verstärkungsrille (7) befestigt ist sowie mehreren Spannvorrichtungen (3), die lösbar am Befestigungsring (6) befestigt sind, dadurch gekennzeichnet, dass die Verstärkungsrille (7) am Distanzring (2) angeordnet ist, dass die Spannvorrichtungen (3) je einen in den Befestigungsring (6) eingehängten Spannhaken (15) und eine Spannvorrichtung (3) in der Form eines Kniehebels aufweisen und dass die Spannhaken (15) im Abstand zur Verstärkungsrille (7) auf dem Distanzring (2) abgestützt sind.

2. Doppelrad nach Anspruch 1, dadurch gekennzeichnet, dass die Spannhaken (15) im Bereich ihrer Abstützung eine verstellbare Unterlage (11) zur Einstellung des Überschnappweges (10) der Spannvorrichtung (3) aufweisen.

## Claims

1. A dual wheel for a vehicle, having a vehicle wheel rim (4) and an outer rim (1), a coupling device (20) between the rims (1, 4), a complete spacer ring (2) which is secured to the outer rim (1), a ring fastener (6) which is secured to the inner face of an indented reinforcing groove (7) and a plurality of tightening devices (3) which are detachably secured to the ring fastener (6), characterised in that the reinforcing groove (7) is provided on the spacer ring (2), that the tightening devices (3) each comprise a tightening hook (15) suspended in the ring fastener (6) and a tightening device (3) in the form of a toggle lever and that the tightening hooks (15) are supported on the spacer ring (2) with spacing from the reinforcing groove (7).

2. A dual wheel as claimed in Claim 1, characterised in that, in the region where they are supported, the tightening hooks (15) comprise an adjustable support (11) to adjust the snap-over travel (10) of the tightening device (3).

## Revendications

1. Roues jumelées pour véhicules, comprenant une jante intérieure (4), une jante extérieure (1), un dispositif d'accouplement (20), placé entre les jantes (1, 4), une rondelle d'écartement pleine (2), fixée à la jante extérieure (1), une bague de fixation (6) fixée sur la face intérieure d'une gorge de renfort dentelée (7), ainsi que plusieurs dispositifs tendeurs (3) fixés de façon amovible à la bague de fixation (6), lesquelles roues jumelées sont caractérisées en ce que la gorge de renfort (7) est ménagée sur la rondelle d'écartement (2), en ce que les dispositifs tendeurs (3) comportent chacun un crochet tendeur (15) suspendu à l'intérieur de la bague de fixation (6) et un dispositif tendeur (3) qui présente la forme d'un levier coudé, et en ce que les crochets tendeurs (15) sont supportés, à distance de la gorge de renfort (7), par la rondelle d'écartement (2).

2. Roues jumelées selon la revendication 1, caractérisées en ce que les crochets tendeurs (15) comportent dans leur zone de support, une cale réglable (11) pour le réglage du débattement (10) du dispositif tendeur (3).

3

0 094 916